# EUROPÄISCHE PATENTANMELDUNG

(11) **EP 4 464 395 A1**
(43) Veröffentlichungstag der Anmeldung: **20.11.2024**
(21) Anmeldenummer: 24174352.5
(22) Anmeldetag: 06.05.2024
(51) Int. Cl.: B01D 39/08, C02F 1/00, D03D 15/20, D03D 27/00

(54) **FILTERTUCH MIT ANTIMIKROBIELLEN METALLIONEN**

(30) Priorität: 15.05.2023 DE 102023112762
(71) Anmelder: R+F FilterElements GmbH, 31134 Hildesheim (DE)
(72) Erfinder: Rippel, Anna, 47799 Krefeld (DE); Franke, Christopher, 31134 Hildesheim (DE)
(74) Vertreter: Lüdtke, Thomas

(57) **Zusammenfassung**

Die Erfindung betrifft ein Filtertuch (1) zur Wasserfiltration sowie ein Verfahren zur Wasserfiltration mit einem Filtertuch (1), wobei das Filtertuch (1) einen Geweberücken (4) und Polfasern (2) aufweist, wobei der Geweberücken (4) zumindest teilweise durch Geweberückenfasern (7) gebildet wird, wobei die Polfasern (2) zumindest teilweise an dem Geweberücken (4) fixiert sind, und das Filtertuch (1) Metall (5) aufweist, wobei das Metall (5) dazu ausgebildet ist, bei Kontakt mit Wasser antimikrobielle Metallionen (3) bereitzustellen.

## Beschreibung

Die Erfindung betrifft ein Filtertuch zur Wasserfiltration sowie ein Verfahren zur Wasserfiltration mit einem Filtertuch.

Filtertücher zur Filtration von Wasser sind aus dem Stand der Technik bekannt. Insbesondere in Klärwerken werden Filtertücher im Rahmen des Reinigungsprozesses von Abwasser genutzt, vorzugsweise in der letzten Reinigungsstufe.

Hierzu werden beispielsweise Scheibenfilter verwendet, welche durch mit Filtertuch bespannte Rahmen gebildet werden. Auch weitere Filtertypen wie Trommelfilter, Drucktrommelfilter und Traveling Bridge Sandfilter können Filtertuch aufweisen. Mit entsprechenden Filtern ist es unter anderem möglich Phosphor, Mikropartikel und Rückstände von Medikamenten und Industrieprodukten aus dem Abwasser herauszufiltern.

Neben der Abwasserfiltration ist es auch möglich, Filtertücher zur Mischwasserbehandlung, Phosphorentfernung durch Flockungsfiltration, Rohabwasserfiltration (primary), Schlussfiltration (tertiary und quartiary / tertiäre und quartäre), Spurenstoffentfernung, Behandlung von Oberflächenwasser, Behandlung von Straßenabwasser, Trinkwasseraufbereitung oder Vorfiltration für eine Desinfektion zu verwenden.

Bei sämtlichen beschriebenen Filtrationsarten ist das Filtertuch mechanischen, chemischen und biologischen Belastungen ausgesetzt, wodurch das im jeweiligen Filter verwendete Filtertuch nach einer gewissen Zeit ersetzt werden muss.

Die mechanischen Belastungen betreffen beispielsweise ein Zusetzen des Filtertuchs mit Partikeln. Darüber hinaus strapaziert die Strömung des durchgeleiteten Wassers das Filtertuch mechanisch.

Die chemischen Belastungen betreffen beispielsweise das Zersetzen des Filtertuchs durch aggressive Stoffe im durchgeleiteten Wasser.

Die biologischen Belastungen betreffen beispielsweise ein Ansiedeln von Bakterien, Viren, Algen oder Algenblüten auf dem Filtertuch, welche einen Biofilm bilden und das Filtertuch zusetzen. Insbesondere bei der Abwasserreinigung können Bakterien im Rahmen der biologischen Abwasserreinigung zur Entfernung von unter anderem Kohlenstoff und Stickstoff verwendet werden. Eben diese Bakterien können jedoch im Rahmen der letzten Reinigungsstufe mittels Filtertuch aufweisender Filter, vorzugsweise Scheibenfiltern, zu kurzen Standzeiten der Filter führen. Der durch die Bakterien gebildete Biofilm setzt das Filtertuch zu.

Sämtliche genannten Belastungen verkürzen die Standzeit des Filtertuchs.

Der Erfindung liegt die Aufgabe zugrunde, ein Filtertuch zur Wasserfiltration sowie ein Verfahren zur Wasserfiltration mit einem Filtertuch bereitzustellen, welches eine längere Standzeit ermöglicht.

Diese Aufgabe wird gelöst durch ein Filtertuch gemäß Anspruch 1 sowie durch ein Verfahren gemäß Anspruch 15. Die Unteransprüche geben bevorzugte Weiterbildungen an.

Erfindungsgemäß weist das Filtertuch zur Wasserfiltration einen Geweberücken und Polfasern auf, wobei der Geweberücken zumindest teilweise durch Geweberückenfasern gebildet wird, wobei die Polfasern zumindest teilweise an dem Geweberücken fixiert sind und das Filtertuch Metall aufweist, wobei das Metall dazu ausgebildet ist, bei Kontakt mit Wasser antimikrobielle Metallionen bereitzustellen.

Die Wasserfiltration kann hierbei eine Abwasserfiltration, eine Mischwasserbehandlung, Phosphorentfernung durch Flockungsfiltration, Rohabwasserfiltration (primary), Schlussfiltration (tertiary und quartiary / tertiäre und quartäre), Spurenstoffentfernung, die Behandlung von Oberflächenwasser, die Behandlung von Straßenabwasser, eine Trinkwasseraufbereitung oder Vorfiltration für eine Desinfektion sein.

Unter dem Begriff Polfasern werden vorzugsweise Fasern verstanden, welche auf der rechten Warenseite einen Faserflor durch ein zusätzliches Fadensystem in der Kette (Polkette oder Florkette) zu den bereits drei bestehenden Kettsystemen bilden. Dieser Faserflor wird auch als Plüsch und weiter als Kettsamt bezeichnet. Die Pol- oder Flornoppen binden dabei am Schuss an.

Die antimikrobiellen Metallionen entstehen, wenn Wasser in Kontakt mit dem Metall kommt. Bei Kontakt mit Wasser oxidiert das Metall und gibt positiv geladene Ionen an die Umgebung frei.

Antimikrobielle Metallionen weisen biozide Eigenschaften auf. Die hohe Reaktivität der geladenen Metallionen ist die Grundlage der antimikrobiellen Wirkung der Metallionen. Die antimikrobiellen Metallionen reagieren mit kleinsten Ansätzen eines Biofilms und schädigen oder zerstören ihn dabei. Ein das Filtertuch zusetzender Biofilm kann sich somit gar nicht erst bilden. Durch die antimikrobiellen Metallionen ist somit eine effektive Bekämpfung von Bakterien, Viren, Algen und Algenblüten, zusammengefasst als Biofilm, möglich.

Das die Metallionen bereitstellende oder abgebende Metall kann beispielsweise in Form kleiner Partikel oder Drähte im Filtertuch vorhanden sein.

Bei einem erfindungsgemäßen Filtertuch wird somit die Bildung eines Biofilms auf dem Filtertuch verhindert oder vermindert, so dass das Filtertuch nicht durch einen Biofilm zusetzt. Hierdurch verlängert sich die Standzeit des Filtertuchs.

Das erfindungsgemäße Filtertuch ist insbesondere für eine Wasserfiltration geeignet, bei dem das Wasser eine hohe Bakterienbelastung aufweist. Beispielsweise kann das erfindungsgemäße Filtertuch für die Filtration im Rahmen der Abwasserreinigung genutzt werden, insbesondere in der letzten Reinigungsstufe, wobei in einer vorherigen Reinigungsstufe vorzugsweise eine biologische Abwasserreinigung erfolgt ist. Hierzu kann das Filtertuch beispielsweise auf ein Segment eines Scheibenfilters gespannt werden.

Gemäß dem erfindungsgemäßen Verfahren wird ein erfindungsgemäßes Filtertuch zur Wasserfiltration genutzt, wobei Wasser zur Abwasserreinigung, Mischwasserbehandlung, Phosphorentfernung durch Flockungsfiltration, Rohabwasserfiltration (primary), Schlussfiltration (tertiary und quartiary / tertiäre und quartäre), Spurenstoffentfernung, Behandlung von Oberflächenwasser, Behandlung von Straßenabwasser, Trinkwasseraufbereitung oder Vorfiltration für eine Desinfektion durch das Filtertuch geleitet wird.

Dies ermöglicht die Standzeit des Filtertuchs zu verlängern, da die Bildung eines Biofilms verhindert oder verringert wird, wodurch sich das Filtertuch nicht durch einen Biofilm zusetzt.

Gemäß einer Ausführungsform des Filtertuchs weisen die Geweberückenfasern und/oder die Polfasern das Metall auf.

Hierdurch wir die Bildung eines Biofilms auf den Geweberückenfasern und/oder Polfasern wirksam verhindert oder verringert, wodurch sich die Standzeit des Filtertuchs insgesamt verlängert.

Gemäß einer weiteren Ausführungsform des Filtertuchs ist das Metall aus der Gruppe der Gold-, Silber-, Zink-, Kupfer-, Zirkon- und Quecksilbermetalle ausgewählt.

Bei Kontakt des Metalls mit Wasser werden die genannten antimikrobiellen Metallionen frei. Metallionen von Metallen aus der Gruppe der Gold-, Silber-, Zink-, Kupfer-, Zirkon- und Quecksilbermetalle haben sich als besonders wirksam gegen die Bildung eines Biofilms erwiesen. Bei der Wahl des Metalls ist zusätzlich auf die Umweltverträglichkeit zu achten. Bevorzugt wird Silber gewählt.

Gemäß einer weiteren Ausführungsform des Filtertuchs sind im Filtertuch Metall-Nanopartikel angeordnet, wobei die Metall-Nanopartikel ausgebildet sind, die antimikrobiellen Metallionen bereitzustellen.

Die Metall-Nanopartikel stellen somit zumindest einen Teil, vorzugsweise den gesamten Teil des im Filtertuch angeordneten Metalls dar.

Ein Vorteil besteht darin, dass die antimikrobielle Wirkung der antimikrobiellen Metallionen permanent und nicht auswaschbar ist, da bei Kontakt mit Wasser durch die Metall-Nanopartikel beständig neue antimikrobielle Metallionen gebildet werden.

Die Metall Nanopartikel weisen beispielsweise Abmessungen im Bereich von 1 nm - 100 nm auf. Beispielsweise kann der Durchmesser der Metall-Nanopartikel 1 nm - 100 nm betragen.

Die Konzentration der Metall-Nanopartikel im Filtertuch liegt beispielsweise im Bereich von 1 mg/kg - 20.000 mg/kg Filtertuch, vorzugsweise im Bereich von 50 mg/kg - 1.000 mg/kg Filtertuch. Beispielsweise kann ein Filtertuch Silber-Nanopartikel in einer Konzentration im Bereich von 50 mg/kg - 1.000 mg/kg Filtertuch aufweisen. Dieser Bereich stellt einen guten Kompromiss aus wirtschaftlichen Überlegungen und funktionalen Überlegungen dar.

Gemäß einer Weiterführung der vorherigen Ausführungsform sind die Metall-Nanopartikel in den und/oder an den Geweberückenfasern und/oder in den und/oder an den Polfasern angeordnet, insbesondere in einer Extrusionsmasse der Geweberückenfasern und/oder Polfasern.

Hierdurch werden die antimikrobiellen Metallionen auf den Geweberückenfasern und/oder Polfasern bei Kontakt mit Wasser bereitgestellt. Die antimikrobiellen Metallionen wirken somit unmittelbar auf der Oberfläche der Geweberückenfasern und/oder Polfasern, was die Bildung eines Biofilms wirksam verhindert oder verringert und somit die Standzeit des Filtertuchs verlängert.

Ein Hinzugeben von Metall-Nanopartikeln in die Extrusionsmasse der Geweberückenfasern und/oder Polfasern ist besonders vorteilhaft, da dies eine einfache Methode zum Durchsetzen der Geweberückenfasern und/oder Polfasern mit Metall-Nanopartikeln darstellt. Darüber hinaus wird eine homogene Verteilung von Metall-Nanopartikeln in den Geweberückenfasern und/oder Polfasern ermöglicht.

Gemäß einer weiteren Ausführungsform des Filtertuchs sind im Filtertuch Metalldrähte angeordnet, insbesondere in das Filtertuch eingewebte, eingewirkte, eingestrickte und/oder eingetuftete Metalldrähte, wobei die Metalldrähte ausgebildet sind, die antimikrobiellen Metallionen bereitzustellen.

Diese Ausführungsform kann alternativ oder zusätzlich zur vorherigen Ausführungsform vorgesehen sein.

Die Metalldrähte stellen somit zumindest einen Teil, vorzugsweise den gesamten Teil des im Filtertuch angeordneten Metalls dar.

Die Konzentration der Metalldrähte kann beispielsweise analog zur Konzentration der Metall-Nanopartikeln gewählt werden.

Somit sind Metalldrähte aus beispielsweise Gold-, Silber-, Zink-, Kupfer-, Zirkon- und/oder Quecksilber im Filtertuch angeordnet. Die Drähte wiederum stellen bei Kontakt mit Wasser die entsprechenden antimikrobiellen Metallionen bereit.

Ein Vorteil besteht darin, dass die antimikrobielle Wirkung der antimikrobiellen Metallionen permanent und nicht auswaschbar ist, da durch die Metalldrähte beständig neue antimikrobielle Metallionen gebildet werden.

Ein Einweben, Einwirken, Einstricken und/oder Eintuften der Metalldrähte in das Filtertuch stellt eine einfache und stabile Methode des Anordnens dar.

Gemäß einer weiteren Ausführungsform des Filtertuchs sind die Polfasern zumindest teilweise mit den Geweberückenfasern verwebt, verwirkt, verstrickt und/oder vertuftet.

Dies bietet eine gute Stabilität des Filtertuchs und verhindert ein Ausreißen der Polfasern vom Geweberücken.

Gemäß einer weiteren Ausführungsform des Filtertuchs weisen die Geweberückenfasern und/oder Polfasern Polymere auf, insbesondere Polyamid, Polyester, Polyethylenterephthalat und/oder Polypropylen sowie deren Rezyklate.

Geweberückenfasern und/oder Polfasern aus Polymeren führen zu einer guten Integrität der jeweiligen Fasern und somit zu einer guten mechanischen sowie chemischen Stabilität des Filtertuchs. Die Standzeiten des Filtertuchs werden hierdurch verlängert. Darüber hinaus sind entsprechende Geweberückenfasern und/oder Polfasern günstig im großen Maßstab verfügbar.

Gemäß einer weiteren Ausführungsform des Filtertuchs werden die Geweberückenfasern durch Multifilamente, Mikrofasern, Ultrafeinfasern, Monofilamente, Stapelfasern und/oder Fibrilliertes Tape-Garn gebildet.

Unter dem Begriff Multifilamente werden Fasern verstanden, die aus Mehrlochdüsen ersponnen sind und düsenweise mit oder ohne Drehung zusammengefasst werden. Diese können in glatter und/oder texturierter Form vorliegen und bestehen aus synthetischen Chemiefasern. Multifilamente weisen den Vorteil auf, dass sie aus vielen feinen Endlosfasern bestehen, die im glatten Zustand dicht und gleichmäßig parallel vorliegen und somit gut abzureinigen sind. Im texturierten Zustand liegen sie mehr oder weniger gekräuselt und somit elastisch, bauschig und voluminös vor, wodurch sie zwar schlechter abzureinigen sind, aber ein verbessertes Partikelaufnahmevermögen aufweisen.

Unter dem Begriff Mikrofasern werden Fasern verstanden, deren Einzelfaserfeinheit geringer als 1 dtex ist, genauer zwischen 0,3 und 0,8 dtex. Mikrofasern weisen den Vorteil auf, dass, da sie so fein sind, viele von ihnen eng zusammengepackt werden können. Es werden viel mehr feine Fasern benötigt, um einen Faden herzustellen, woraus sich eine größere dichtere Fadenoberfläche ergibt. Somit ist ein verbessertes Partikelrückhaltevermögen insbesondere von kleineren Partikeln gegeben.

Unter dem Begriff Ultrafeinfasern werden Fasern verstanden, deren Einzelfaserfeinheit geringer als 0,3 dtex ist. Ultrafasern weisen den Vorteil auf, dass, da sie so noch feiner als Mikrofasern sind, noch mehr von ihnen eng zusammengepackt werden können. Es werden nochmals erheblich mehr feine Fasern benötigt als bei der Mikrofaser, um einen Faden herzustellen, woraus sich eine noch größere dichtere Fadenoberfläche ergibt. Somit ist ein verbessertes Partikelrückhaltevermögen insbesondere von noch kleineren Partikeln gegeben.

Unter dem Begriff Monofilamente werden Fasern verstanden, die aus Einlochdüsen ersponnen sind. Je nach Düsenöffnung können feine bis grobe Filamentdurchmesser sowie verschiedene Querschnittsformen erzeugt werden. Monofilamente weisen den Vorteil auf, dass sie als eine einzige Endlosfaser eine gewisse Härte und Steifigkeit aufweisen, welche insbesondere verwendet im Geweberücken Stabilität erzeugen. Des Weiteren sind sie glatt, wodurch eine verbesserte Abreinigung gegeben ist.

Unter dem Begriff Stapelfaser werden geschnittene Chemiefasern verstanden, die auf mechanischem Weg durch Zusammendrehen dieser zu Spinnfasergarnen werden. Stapelfasern oder Spinnfasergarne mit vorzugsweiser langer Stapellänge weisen den Vorteil auf, dass sie mehr oder weniger bauschig und voluminös sind und durch ihre Haarigkeit zwar schlechter abzureinigen sind, aber ein verbessertes Partikelaufnahmevermögen aufweisen.

Unter dem Begriff Fibrilliertes Tape-Garn oder Monotape oder Schlitzfolie werden "Fasern" verstanden, bei denen ein einzelnes Band hergestellt und dann längs geschnitten wird, um es in mehrere Bänder zu teilen, wodurch eine Gitterstruktur entsteht. Fibrillierte Tape-Garne weisen den Vorteil auf, dass sie leicht sind, abriebfest und eine hohe Zugfestigkeit sowie Haltbarkeit aufweisen.

Gemäß einer weiteren Ausführungsform des Filtertuchs werden die Polfasern durch Multifilamente, Mikrofaser, Ultrafeinfasern, Stapelfasern und/oder Fibrilliertes Tape-Garn gebildet.

Es ergeben sich ähnliche Vorteile wie zu den Geweberückenfasern.

Gemäß einer weiteren Ausführungsform des Filtertuchs weisen die Polfasern eine Höhe (h2) im Bereich von 1 mm bis 50 mm, insbesondere im Bereich 5 bis 30 mm, weiter bevorzugt im Bereich 10 mm bis 20 mm auf, und/oder einen Titer (t2) im Bereich von 100 dtex bis 2200 dtex, insbesondere im Bereich 250 dtex bis 1100 dtex auf.

Die Höhe (h2) gibt an, wie weit die Polfasern vom Geweberücken abstehen, bzw. die Länge der Polfasern die aus dem Geweberücken herausragt. Eine Höhe (h2) im Bereich von 1 mm bis 50 mm hat sich als besonders vorteilhaft erweisen. Die Auswahl der Polfaserlänge beruht auf technischen Eigenschaften im Zusammenhang mit dem Einsatz zur Filtrierung. Zu kurze Fasern bieten nur geringe Filtrationseffizienz, während zu lange Fasern die Gefahr mit sich bringen, dass sich Polfasernester bilden, die die Filtrationseffizienz ebenfalls verschlechtern. Das hat dann zur Folge, dass der Abreinigungsprozess im späteren Verlauf des Betriebsprozesses gestört werden kann. Eine Höhe (h2) im Bereich von 10 mm bis 20 mm verstärkt diese Vorteile weiter.

Der Titer wird gemäß ISO 1144 und DIN 60905 bestimmt und angegeben. 1 dtex entspricht somit 1 Gramm pro 10.000 Meter und ist ein Maß für die Feinheit der betreffenden Faser.

Ein Titer (t2) im Bereich von 100 dtex bis 2200 dtex hat sich als besonders vorteilhaft erwiesen, da so eine ausreichende Dichte der Gewebeoberfläche erzielt und die entsprechende Filtrationswirkung erreicht werden kann. Ein Titer (t2) im Bereich von Bereich 250 dtex bis 1100 dtex verstärkt diese Vorteile weiter.

Gemäß einer weiteren Ausführungsform des Filtertuchs weisen die Geweberückenfasern einen Durchmesser (d7) im Bereich von 0,05 mm bis 2 mm, insbesondere im Bereich 0,10 mm bis 1 mm auf, und/oder einen Titer (t7) im Bereich von 100 dtex bis 2200 dtex, insbesondere im Bereich 250 dtex bis 1100 dtex auf.

Der Durchmesser (d7) gibt den Durchmesser einer Geweberückenfaser an, wobei die Geweberückenfaser vorzugsweise durch Multifilamente, Mikrofasern, Ultrafeinfasern, Monofilamente, Stapelfasern und/oder Fibrilliertem Tape-Garn gebildet sein kann. Die Angabe des Durchmessers (d7) kann somit im Falle von Multifilamenten, Mikrofasern, Ultrafeinfasern auf mehrere Einzelfäden bezogen sein, welche zusammen eine Geweberückenfaser bilden.

Ein Durchmesser (d7) im Bereich von 0,05 mm bis 2 mm hat sich als besonders vorteilhaft erweisen, da dem Geweberücken so die notwendige Festigkeit und Dimensionsstabilität gegeben werden kann. Ein Durchmesser (d7) im Bereich von 0,10 mm bis 1 mm verstärkt diese Vorteile weiter, da diese leichter zu produzieren sind und einfacher in den Geweberücken eingearbeitet werden können.

Für den Titer (t7) gelten analoge Ausführungen wie bei den Polfasern.

Gemäß einer weiteren Ausführungsform des Filtertuchs ist das Filtertuch auf einem Scheibenfilter, Trommelfilter, Drucktrommelfilter und/oder Traveling Bridge Sandfilter fixierbar.

Dies ermöglicht unter anderem die Verwendung des Filtertuchs im Bereich der Abwasserfiltration. Bei der Abwasserfiltration stellt die Bildung eines Biofilms eine besondere Herausforderung dar. Die Standzeiten von Scheibenfiltern, Trommelfiltern, Drucktrommelfiltern und/oder Traveling Bridge Sandfiltern mit einem erfindungsgemäßen Filtertuch verlängert somit die Standzeit des jeweiligen Filters.

Das Filtertuch ist durch eine entsprechende Konfektionierung und das Anbringen von Befestigungsmöglichkeiten an den jeweiligen Filtern fixierbar.

Gemäß einer weiteren Ausführungsform des Filtertuchs ist das Filtertuch zum Herausfiltern von Phosphor, Mikropartikeln, Pigmente und/oder Medikamentenrückständen geeignet.

Das Herausfiltern von Phosphor und Medikamentenrückständen erfolgt hierbei vorzugsweise in Verbindung mit Flockenbildung durch FE3+, FE2+ oder Aktivkohle.

Analog zur vorherigen Ausführungsform ermöglicht dies unter anderem die Verwendung des Filtertuchs im Bereich der Abwasserfiltration, vorzugsweise der letzten Stufe der Abwasserfiltration.

Das Filtertuch weist hierzu beispielsweise die folgenden Eigenschaften auf:
Pol- sowie Geweberückenfasern aus Polyestermikrofaser bzw. Mono- und Multifilament, eine Reißfestigkeit von >890 N in Kett- und Schussrichtung, eine Polfaserhöhe von 15 mm, eine Maschenweite im Geweberücken von ≤ 400 µm und einem Flächengewicht von 650 g/m².

Die Erfindung wird im Folgenden anhand der beiliegenden Zeichnungen an einigen Ausführungsformen erläutert. Es zeigen:
- Figur 1: zeigt eine schematische Darstellung einer Ausführungsform eines Filtertuchs auf einem Segment eines Scheibenfilters;
- Figur 2: zeigt eine schematische Darstellung einer Ausführungsform eines Gewebequerschnitts des Filtertuchs;
- Figur 3a: zeigt eine schematische Darstellung einer ersten Ausführungsform einer Faser eines Filtertuchs;
- Figur 3b: zeigt eine schematische Darstellung einer zweiten Ausführungsform einer Faser eines Filtertuchs.

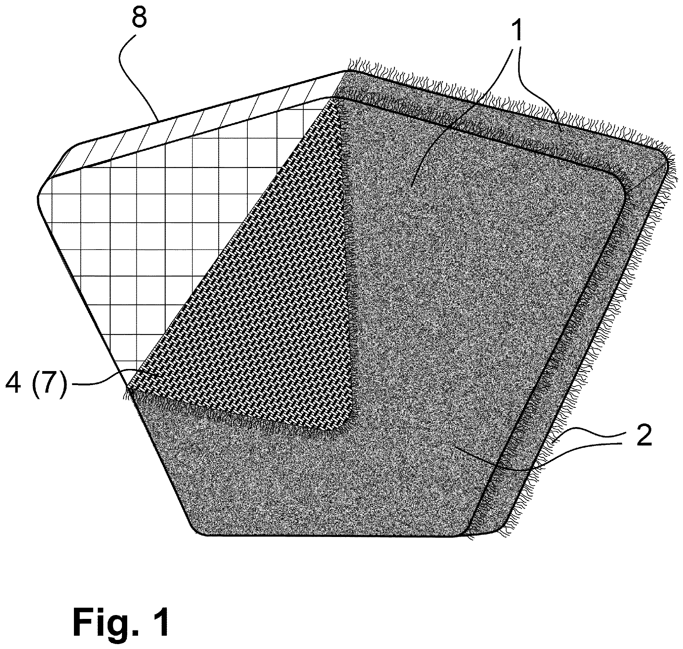

Figur 1 zeigt eine Ausführungsform eines Filtertuchs 1 auf einem Scheibenfiltersegment 8. Das Scheibenfiltersegment 8 wird durch eine Stützstruktur gebildet, wobei das Filtertuch 1 auf dem Scheibenfilter 8 befestigt wird.

Hierfür ist das Filtertuch 1 entsprechend zu konfektionieren und mit Befestigungsmöglichkeiten, beispielsweise Klettverschlüssen zu versehen (nicht dargestellt).

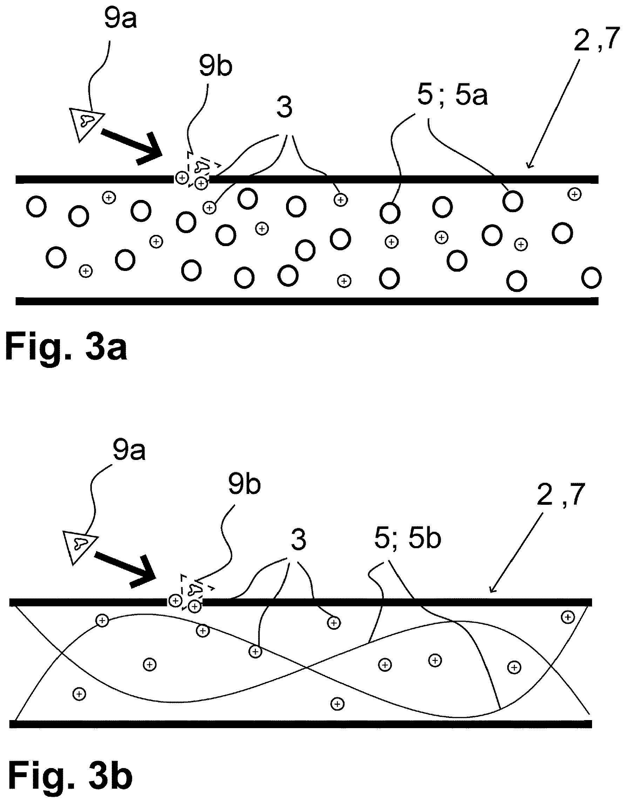

Das Filtertuch 1 weist einen Geweberücken 4 auf, welcher durch Geweberückenfasern 7 gebildet wird. An dem Geweberücken 4 sind Polfasern 2 fixiert. Die Fixierung erfolgt durch verweben, verwirken, verstricken und/oder vertuften der Geweberückenfasern 7 mit den Polfasern 2. Die Geweberückenfasern 7 und/oder Polfasern 2 weisen Metall 5 auf, wobei das Metall 5 dazu ausgebildet ist, bei Kontakt mit Wasser antimikrobielle Metallionen 3 bereitzustellen (siehe Fig. 3a und 3b).

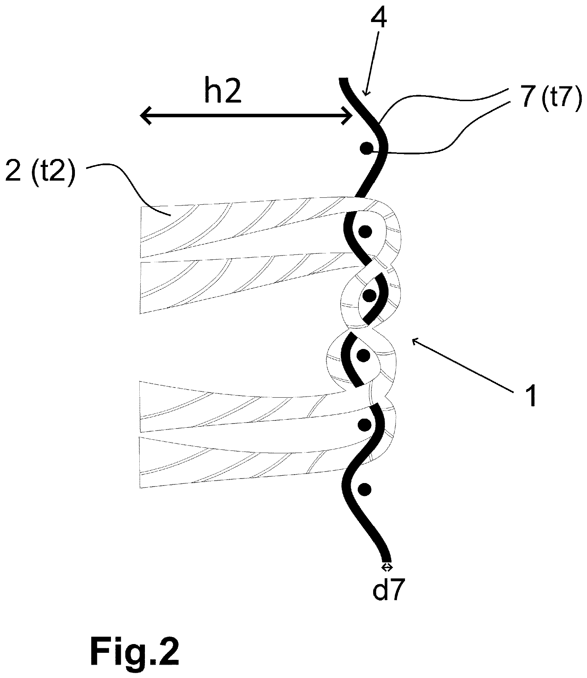

Eine Möglichkeit der Fixierung der Polfasern 2 an den Geweberückenfasern 7 ist in Figur 2 im Detail dargestellt. Das in Figur 2 dargestellte Filtertuch 1 ist bei entsprechender Konfektionierung alternativ auch zusammen mit anderen Filtertypen, beispielsweise einem Trommelfilter, Drucktrommelfilter und/oder Traveling Bridge Sandfilter nutzbar.

Gemäß der in Figur 2 vorliegenden Ausführungsform sind die Geweberückenfasern 7 durch Monofilamente gebildet, wobei die Geweberückenfasern 7 einen Durchmesser d7 im Bereich von 0,05 mm bis 2 mm, insbesondere im Bereich 0,10 mm bis 1 mm aufweisen. Ein Durchmesser d7 der Geweberückenfasern 7 im Bereich von 0,10 mm bis 1 mm hat sich als besonders vorteilhaft erwiesen, da dem Geweberücken 4 so die notwendige Festigkeit und Dimensionsstabilität gegeben werden kann.

Weiter weisen die Geweberückenfasern 7 einen Titer t7 im Bereich von 100 dtex bis 2200 dtex, insbesondere im Bereich 250 dtex bis 1100 dtex auf. Ein Titer t7 im Bereich von 250 dtex bis 1100 dtex hat sich als besonders vorteilhaft erwiesen, da so eine ausreichende Dichte der Gewebeoberfläche erzielt werden kann.

Die Polfasern 2 weisen eine Höhe h2 im Bereich von 1 mm bis 50 mm, insbesondere im Bereich 5 mm bis 30 mm, weiter bevorzugt im Bereich 10 mm bis 20 mm auf.

Die Höhe h2 gibt an, wie weit die Polfasern vom Geweberücken abstehen, bzw. die Länge der Polfasern die aus dem Geweberücken herausragt. Eine Höhe h2 im Bereich von 10 mm bis 20 mm hat sich als besonders vorteilhaft erwiesen, da dieser Bereiche einen guten Kompromiss zwischen Filtrationseffizienz und der nicht gewünschten Bildung von Polfasernestern darstellt.

Weiter weisen die Polfasern 2 einen Titer t2 im Bereich von 100 dtex bis 2200 dtex, insbesondere im Bereich 250 dtex bis 1100 dtex auf. Auch hier ist es durch die Wahl des genannten Bereichs möglich, eine ausreichende Dichte der Gewebeoberfläche zu erzielen.

Gemäß der in Figur 2 vorliegenden Ausführungsform sind die Polfasern 2 durch Mikrofasern gebildet, welche mit zunehmender Höhe h2 ausgehend vom Geweberücken 4 auffächern.

Polfasern 2 aus Mikrofasern weisen den Vorteil auf, dass da sie so fein sind, dass viele von ihnen eng zusammengepackt werden können. Es werden viel mehr feine Fasern benötigt, um einen Faden herzustellen, woraus sich eine größere dichtere Fadenoberfläche ergibt. Somit ist ein verbessertes Partikelrückhaltevermögen insbesondere von kleineren Partikeln gegeben.

Ausführungsformen der Polfasern 2 und Geweberückenfasern 7 sind im Detail in den Figuren 3a und 3b dargestellt, wobei der Aufbau für Polfasern 2 und Geweberückenfasern 7 identisch sein kann, weshalb die dargestellten Fasern als 2 (Polfaser), 7 (Geweberückenfaser) bezeichnet sind, diese jedoch nicht ein und dieselbe Faser sind. Die Identität ist lediglich auf den Aufbau bezogen und wird im Folgenden anhand der Polfaser 2 erläutert, gilt jedoch analog für die Geweberückenfaser 7.

Figur 3a zeigt schematisch eine Polfaser 2, wobei Metall-Nanopartikel 5a in der Polfaser 2 angeordnet sind. Durch die Metall-Nanopartikel 5a weist das die Polfasern 2 aufweisende Filtertuch 1 Metall 5 auf, welches bei Kontakt mit Wasser antimikrobielle Metallionen 3 bereitstellt.

Die Metall-Nanopartikel 5a wurden vorzugsweise bereits in eine Extrusionsmasse der Polfasern 2 eingebracht, so dass die Metall-Nanopartikel 5a homogen innerhalb der Polfaser 2 verteilt sind.

Dies weist den Vorteil auf, dass die Bildung oder Bereitstellung der antimikrobielle Metallionen 3 durch die Metall-Nanopartikel 5a bei Kontakt mit Wasser fortwährend geschieht, und kein schnelles Auswaschen des Metalls 5 erfolgt.

Die Metall-Nanopartikel 5a sind aus der Gruppe der Gold-, Silber-, Zink-, Kupfer-, Zirkon- und Quecksilbermetalle gebildet. Besonders bevorzugt ist hierbei Silber.

Bei Kontakt mit Wasser oxidiert das Metall 5 der Metall-Nanopartikel 5a und gibt die antimikrobiellen Metallionen 3 ab. Ein (intakter) Biofilm 9a, gebildet durch Bakterien, Viren, Algen oder Algenblüten, der sich auf der Oberfläche der Polfaser 2 absetzt, wird durch die antimikrobiellen Metallionen 3 aufgrund deren starker Reaktionsfreudigkeit angegriffen und in einen zerstörten Biofilm 9b umgewandelt. Die Umwandlung eines intakten Biofilms 9a in einen zerstörten Biofilm 9b durch die Metallionen 3 ist in Figur 3a durch den Pfeil illustriert.

Die antimikrobiellen Metallionen 3 reagieren bereits mit kleinsten Ansätzen eines Biofilms 9a und schädigen oder zerstören den Biofilm 9b dabei. Ein das Filtertuch 1 zusetzender Biofilm 9a kann sich somit gar nicht erst bilden. Durch die antimikrobiellen Metallionen 3 ist somit eine effektive Bekämpfung von Bakterien, Viren, Algen und Algenblüten, zusammengefasst als Biofilm 9a, möglich.

Figur 3b zeigt schematisch eine Polfaser 2, wobei Metalldrähte 5b in der Polfaser 2 angeordnet sind. Diese Ausführungsform ist alternativ oder zusätzlich zu den Figur 3a dargestellten Ausführungsform. Die Metalldrähte 5b wirken analog zu den Metall-Nanopartikeln 5a aus Figur 3a.

Bei Kontakt mit Wasser oxidiert das Metall 5 der Metalldrähte 5b und gibt die antimikrobiellen Metallionen 3 ab, welche in analoger Weise einen intakten Biofilm 9a in einen zerstörten Biofilm 9b umwandeln und somit ein Zusetzten des Filtertuchs 1 verhindern.

Mittels eines wie in Figur 1 dargestellten Scheibenfiltersegments 8, bespannt mit einem Filtertuch 1, welches wie in Figur 2 dargestellt aus Polfasern 2 und Geweberückenfasern 4 gebildet wird, wobei die Polfasern 2 und Geweberückenfasern 4 wie in Figur 3a oder 3b dargestellt Metall 5 in Form von Metall-Nanopartikeln 5a (Fig. 3a) oder in Form von Metalldrähten 5b (Fig. 3b) aufweisen, ist es möglich, ein Verfahren zur Wasserfiltration durchzuführen, wobei mit dem Filtertuch 1 Wasser zur Abwasserreinigung, Mischwasserbehandlung, Phosphorentfernung durch Flockungsfiltration, Rohabwasserfiltration (primary), Schlussfiltration (tertiary und quartiary / tertiäre und quartäre), Spurenstoffentfernung, Behandlung von Oberflächenwasser, Behandlung von Straßenabwasser, Trinkwasseraufbereitung oder Vorfiltration für eine Desinfektion durch das Filtertuch 1 geleitet wird.

Das Filtertuch 1 ist bei entsprechender Konfektionierung alternativ auch zusammen mit einem Trommelfilter, Drucktrommelfilter und/oder Traveling Bridge Sandfilter nutzbar.

Ein Filtertuch 1 wie in Figur 2 dargestellt wird insbesondere bei der Abwasserreinigung genutzt, zum Herausfiltern von Phosphor, Mikropartikeln, Pigmente und/oder Medikamentenrückständen. Somit wird unter Wasserfiltration insbesondere eine Abwasserreinigung verstanden.

### Bezugszeichen

- 1: Filtertuch
- 2: Polfasern
- 3: antimikrobielle Metallionen
- 4: Geweberücken
- 5: Metall
- 5a: Metall-Nanopartikel
- 5b: Metalldrähte
- 7: Geweberückenfasern
- 8: Scheibenfiltersegment
- 9a: Biofilm (intakt)
- 9b: Biofilm (zerstört)

- d7: Durchmesser der Geweberückenfasern
- h2: Höhe der Polfasern
- t2: Titer der Polfasern
- t7: Titer der Geweberückenfasern

## Patentansprüche

1. Filtertuch (1) zur Wasserfiltration, aufweisend einen Geweberücken (4) und Polfasern (2),
- wobei der Geweberücken (4) zumindest teilweise durch Geweberückenfasern (7) gebildet wird,
- wobei die Polfasern (2) zumindest teilweise an dem Geweberücken (4) fixiert sind,
**dadurch gekennzeichnet, dass**
das Filtertuch (1) Metall (5) aufweist, wobei das Metall (5) dazu ausgebildet ist, bei Kontakt mit Wasser antimikrobielle Metallionen (3) bereitzustellen.

2. Filtertuch (1) nach der Anspruch 1, **dadurch gekennzeichnet, dass** die Geweberückenfasern (7) und/oder die Polfasern (2) Metall (5) aufweisen.

3. Filtertuch (1) nach einem der vorherigen Ansprüche, **dadurch gekennzeichnet, dass** das Metall (5) aus der Gruppe der Gold-, Silber-, Zink-, Kupfer-, Zirkon- und Quecksilbermetalle ausgewählt ist.

4. Filtertuch (1) nach einem der vorherigen Ansprüche, **dadurch gekennzeichnet, dass** in dem Filtertuch (1) Metall-Nanopartikel (5a) angeordnet sind, wobei die Metall-Nanopartikel (5a) ausgebildet sind, die antimikrobiellen Metallionen (3) bereitzustellen.

5. Filtertuch (1) nach Anspruch 4, **dadurch gekennzeichnet, dass** die Metall-Nanopartikel (5a) in den und/oder an den Geweberückenfasern (7) und/oder in den und/oder an den Polfasern (2) angeordnet sind, insbesondere in einer Extrusionsmasse der Geweberückenfasern (7) und/oder Polfasern (2).

6. Filtertuch (1) nach einem der vorherigen Ansprüche, **dadurch gekennzeichnet, dass** in dem Filtertuch (1) Metalldrähte (5b) angeordnet sind, insbesondere in das Filtertuch (1) eingewebte, eingewirkte, eingestrickte und/oder eingetuftete Metalldrähte (5b), wobei die Metalldrähte (5b) ausgebildet sind, die antimikrobiellen Metallionen (3) bereitzustellen.

7. Filtertuch (1) nach einem der vorherigen Ansprüche, **dadurch gekennzeichnet, dass** die Polfasern (2) zumindest teilweise mit dem Geweberückfasern (7) verwebt, verwirkt, verstrickt und/oder vertuftet sind.

8. Filtertuch (1) nach einem der vorherigen Ansprüche, **dadurch gekennzeichnet, dass** die Geweberückenfasern (7) und/oder Polfasern (2) Polymere aufweisen, insbesondere Polyamid, Polyester, Polyethylenterephthalat und/oder Polypropylen sowie deren Rezyklate.

9. Filtertuch (1) nach einem der vorherigen Ansprüche, **dadurch gekennzeichnet, dass** die Geweberückenfasern (7) durch Multifilamente, Mikrofasern, Ultrafeinfasern, Monofilamente, Stapelfasern und/oder Fibrilliertes Tape-Garn gebildet werden.

10. Filtertuch (1) nach einem der vorherigen Ansprüche, **dadurch gekennzeichnet, dass** die Polfasern (2) durch Multifilamente, Mikrofasern, Ultrafeinfasern, Stapelfasern und/oder Fibrilliertes Tape-Garn gebildet werden.

11. Filtertuch (1) nach einem der vorherigen Ansprüche, **dadurch gekennzeichnet, dass** die Polfasern (2)
- eine Höhe (h2) im Bereich von 1 mm bis 50 mm, insbesondere im Bereich 5 mm bis 30 mm, weiter bevorzugt im Bereich 10 mm bis 20 mm aufweisen, und/oder
- einen Titer (t2) im Bereich von 100 dtex bis 2200 dtex, insbesondere im Bereich 250 dtex bis 1100 dtex aufweisen.

12. Filtertuch (1) nach einem der vorherigen Ansprüche, **dadurch gekennzeichnet, dass** die Geweberückenfasern (7)
- einen Durchmesser (d7) im Bereich von 0,05 mm bis 2 mm, insbesondere im Bereich 0,10 mm bis 1 mm aufweisen, und/oder
- einen Titer (t7) im Bereich von 100 dtex bis 2200 dtex, insbesondere im Bereich 250 dtex bis 1100 dtex aufweisen.

13. Filtertuch (1) nach einem der vorherigen Ansprüche, **dadurch gekennzeichnet, dass** das Filtertuch (1) auf einem Scheibenfilter, Trommelfilter, Drucktrommelfilter und/oder Traveling Bridge Sandfilter fixierbar ist.

14. Filtertuch (1) nach einem der vorherigen Ansprüche, **dadurch gekennzeichnet, dass** das Filtertuch (1) zum Herausfiltern von Phosphor, Mikropartikeln, Pigmente und/oder Medikamentenrückständen geeignet ist.

15. Verfahren zur Wasserfiltration mit einem Filtertuch (1) nach einem der vorherigen Ansprüche, wobei Wasser zur Abwasserreinigung, Mischwasserbehandlung, Phosphorentfernung durch Flockungsfiltration, Rohabwasserfiltration (primary), Schlussfiltration (tertiary und quartiary / tertiäre und quartäre), Spurenstoffentfernung, Behandlung von Oberflächenwasser, Behandlung von Straßenabwasser, Trinkwasseraufbereitung oder Vorfiltration für eine Desinfektion durch das Filtertuch (1) geleitet wird.
